# EUROPEAN PATENT SPECIFICATION

(11) **EP 2 505 779 B1**
(45) Date of publication and mention of the grant of the patent: **23.05.2018**
(21) Application number: 12161088.5
(22) Date of filing: 23.03.2012
(51) Int. Cl.: F01D 5/00, F01D 11/14, F01D 17/02, G01B 7/14, F01D 21/00

(54) **Method and system for inspecting blade tip clearance**
Verfahren und System zum Prüfen des Schaufelspitzenabstands
Procédé et système d'inspection de la clarté de l'extrémité d'une lame

(30) Priority: 28.03.2011 US 201113073724
(43) Date of publication of application: 03.10.2012
(73) Proprietor: General Electric Company, Schenectady, NY 12345 (US)
(72) Inventor: Hynous, Andrew Thomas, Greenville, SC South Carolina 29615 (US)
(74) Representative: Cleary, Fidelma

(56) References cited:
- EP-A1- 2 182 320
- WO-A2-2009/034305
- US-A1- 2003 222 640

## Description

### BACKGROUND OF THE INVENTION

The field of this disclosure relates generally to the inspection of rotor blade tips and, more particularly, to a method and a system for use in inspecting blade tip clearance in a turbine engine.

At least some known turbine engines include a rotor assembly including a plurality of rows of rotor blades. Each rotor blade extends radially outward from a blade platform to a tip, and a flow path casing extends substantially circumferentially around the rotor assembly, such that a tip clearance is defined between each respective rotor blade tip and the casing. The tip clearance is designed to be a minimum, while being sized large enough to facilitate rub-free engine operation through a range of available engine operating conditions. During operation, engine performance may be influenced by the tip clearance between the rotor blade tips and the casing. Specifically, if the clearance increases, leakage across the rotor blade tips may adversely limit the performance of the engine.

Accordingly, it is often desirable to inspect the clearance between the casing and the rotor blade tips in a turbine engine to assess performance characteristics of the engine. In at least some known clearance inspection systems, the tip clearance of each rotor blade is measured manually. Such inspection techniques are time consuming and may be unreliable because of variability in measurements from operator to operator due to different measuring devices and/or different clearance inspection techniques.

Moreover, because of the increased time required to manually inspect the engine and because of the high degree of variability possible in clearance measurements performed by different operators, the quality of at least some known engine performance data may be insufficient to make fundamental engineering decisions that are required to optimize engine performance and energy output. In that regard, operating an engine at less than optimal performance may adversely impact operating revenues and may increase maintenance costs.

EP 2 182 320 B2 describes a method and a system for inspecting blade tip clearance for a turbine by means of a probe configured to emit electromagnetic energy and detect a reflected portion of the latter.

US 2003/0222640 A1 describes a turbine blade clearance on-line measurement system based on measuring excited eddy currents.

WO 2009/034305 A2 shows a rotor blade sensor comprising an electrical arranged to generate an oscillating signal for detecting a rotor blade.

### BRIEF DESCRIPTION OF THE INVENTION

In a first aspect, the invention resides in a system for use in inspecting the blade tips of rotor blades according to claim 1. In another aspect, the invention resides in a method for use in assembling a blade tip clearance inspection system according to claim 7.

### BRIEF DESCRIPTION OF THE DRAWINGS

Embodiments of the present invention will now be described, by way of example only, with reference to the accompanying drawings in which:
Figure 1 is a schematic illustration of an exemplary gas turbine engine;
Figure 2 is a cross-sectional view of an exemplary compressor for use in the gas turbine engine shown in Figure 1;
Figure 3 is a partial cross-sectional view of an exemplary system that may be used to inspect a blade tip clearance in the compressor shown in Figure 2;
Figure 4 is a perspective view of an alternative system that may be used to inspect a blade tip clearance in the compressor shown in Figure 2;
Figure 5 is a top view of the system shown in Figure 4;
Figure 6 is a perspective view of an exemplary probe assembly that may be used with the system shown in Figure 4;
Figure 7 is a rear view of the probe assembly shown in Figure 6;
Figure 8 is a cross-sectional view of the probe assembly shown in Figure 7 taken along line 8-8;
Figure 9 is a perspective view of an exemplary probe holder assembly that may be used with the system shown in Figure 4;
Figure 10 is a top view of the probe holder assembly shown in Figure 9;
Figure 11 is a bottom view of the probe holder assembly shown in Figure 9;
Figure 12 is a rear view of the probe holder assembly shown in Figure 9;
Figure 13 is a side view of the probe holder assembly shown in Figure 9; and
Figure 14 is a cross-sectional view of the system shown in Figure 5 taken along line 14-14 and coupled to a casing of the compressor shown in Figure 2.

### DETAILED DESCRIPTION OF THE INVENTION

The following detailed description illustrates exemplary methods and systems for inspecting blade tip clearance by way of example and not by way of limitation. The description should clearly enable one of ordinary skill in the art to make and use the disclosure, and the description describes several embodiments, adaptations, variations, alternatives, and uses of the disclosure, including what is presently believed to be the best mode of carrying out the disclosure. The disclosure is described herein as being applied to a preferred embodiment, namely, methods and systems for inspecting compressor blade tip clearance in a gas turbine engine. However, it is contemplated that this disclosure has general application in a broad range of systems and/or a variety of other commercial, industrial, and/or consumer applications.

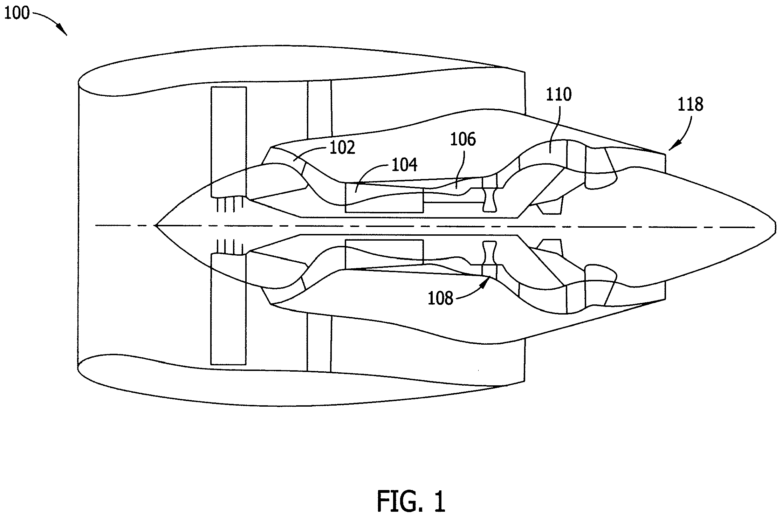

Figure 1 is a schematic illustration of an exemplary gas turbine engine 100 including a fan assembly 102, a high pressure compressor 104, and a combustor 106. Engine 100 also includes a high pressure turbine 108 and a low pressure turbine 110. In operation, air flows through fan assembly 102 and compressed air is supplied from fan assembly 102 to high pressure compressor 104. The highly compressed air is delivered to combustor 106. Airflow from combustor 106 drives rotating turbines 108 and 110 and exits gas turbine engine 100 through an exhaust system 118.

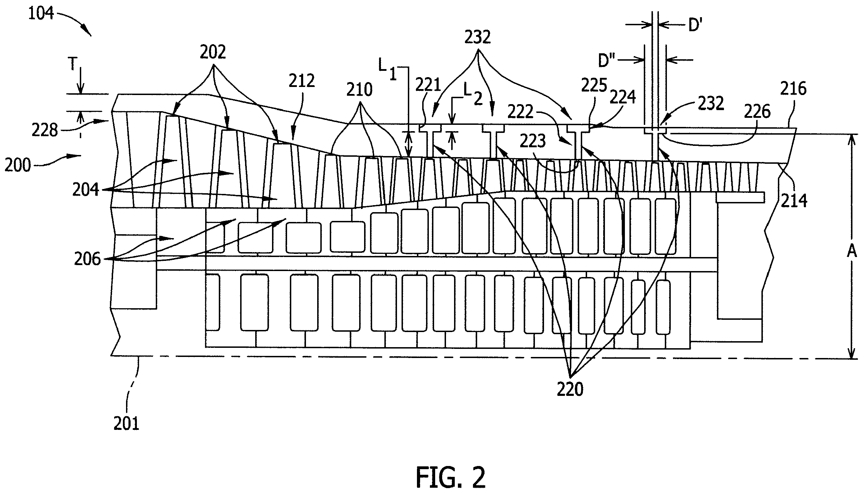

Figure 2 is a cross-sectional view of a portion of a compressor that may be used within engine 100 (shown in Figure 1), such as, but not limited to, high pressure compressor 104. In the exemplary embodiment, compressor 104 includes a flow path 200 that extends through a plurality of compressor stages 202 that are oriented in an axial alignment along a centerline axis 201 extending through compressor 104. Each stage 202 includes a plurality of rotor blades 204 that are coupled to, and spaced circumferentially about, a rotor disk 206 using any suitable attachment configuration (e.g., a "dovetail" configuration). Each compressor rotor blade 204 has a tip 210.

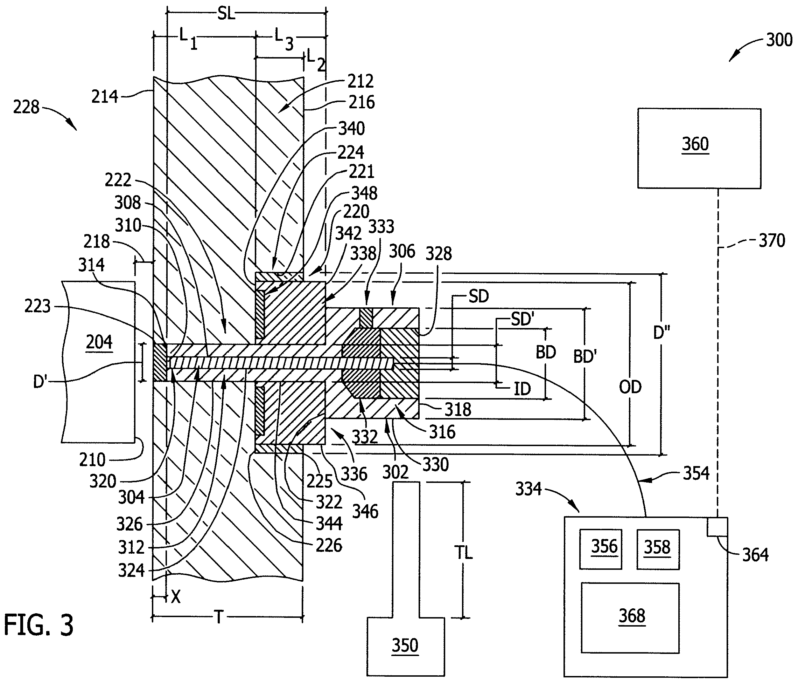

A casing 212 circumscribes stages 202 and forms an outer periphery of flow path 200. Casing 212 includes an inner surface 214 and an outer surface 216. In an exemplary embodiment, casing 212 is fabricated from a plurality of casing segments (not shown) that are coupled together. In one embodiment, casing 212 is assembled by coupling together two casing segments to form a joint (not shown) on opposing sides thereof. In another embodiment, casing 212 is assembled from any number of casing segments. Alternatively, casing 212 may be formed unitarily, as a one-piece unit. In an exemplary embodiment, casing 212 circumscribes rotor blades 204 and is positioned in close proximity thereto, such that a blade tip clearance 218 (shown in Figure 3) is defined between casing inner surface 214 and each blade tip 210.

In an exemplary embodiment, casing 212 includes at least one aperture 220 defined therein and extending therethrough. Each aperture 220 includes an inner surface 221, a first portion 222 (e.g., a bore) having a first end 223 defined in casing inner surface 214, and a second portion 224 (e.g., a counterbore) having a second end 225 defined in casing outer surface 216. First portion 222 is formed with a first length L₁ and a first diameter D', and second portion 224 is formed with a second length L₂ and a second diameter D" that is larger than first diameter D'. In one embodiment, first diameter D' is smaller than about .400 inches. Alternatively, first diameter D' may have any length that enables aperture 220 to function as described herein. In an exemplary embodiment, first portion 222 intersects second portion 224 at a first mating surface 226. In one embodiment, casing 212 has a thickness T that varies along centerline axis 201. Second length L₂ varies along centerline axis 201 with thickness T such that a predetermined distance A is maintained between first mating surface 226 and centerline axis 201. In an exemplary embodiment, first mating surface 226 is substantially planar. Alternatively, first mating surface 226 may have any suitable contour that enables casing 212 to function as described herein.

Each aperture 220 provides access to an interior cavity 228 defined within casing 212 and thus facilitates an inspection of blade tip clearance 218. In an exemplary embodiment, apertures 220 are spaced circumferentially about casing 212, and at least some apertures 220 are substantially aligned with each of a plurality of desired inspection stages 232 to enable a blade tip clearance 218 defined at each desired inspection stage 232 to be inspected. For example, in one embodiment, a plurality of apertures 220 are aligned with each of four desired inspection stages 232 (i.e., there are four sets of apertures 220). Alternatively, any number of sets of apertures 220 may be aligned with any number of desired inspection stages 232. In an exemplary embodiment, each set of apertures 220 includes four apertures 220 that are spaced circumferentially about casing 212. Alternatively, each set of apertures 220 may include any number of circumferentially-spaced apertures 220.

Figure 3 is cross-sectional view of an exemplary system 300 that may be used to inspect a blade tip clearance 218 defined in a rotor assembly, such as high pressure compressor 104 (shown in Figure 2). In an exemplary embodiment, system 300 includes an inspection apparatus 302 including a probe 304 and a probe holder 306. Probe 304 includes an elongated body 308 that includes a tip 310 having a source for emitting electromagnetic energy and a detector (e.g., a sensor) for detecting reflected electromagnetic energy. Alternatively, body 308 may have any shape, and source and/or detector may be located anywhere relative to inspection apparatus 302 that enables inspection apparatus 302 to function as described herein. In one embodiment, probe 304 is an optical probe that emits and/or detects light (e.g., white light). In another embodiment, probe 304 may emit and/or detect any wavelength of electromagnetic energy. In one embodiment, probe 304 generates up to about 2,000 electromagnetic energy readings (i.e., emissions and/or detections) per second.

In the exemplary embodiment, probe holder 306 includes a generally cylindrical probe sheath 312 that has an end 314, a generally cylindrical base 316 having an end 318, and a cavity 320 that extends from sheath end 314 to base end 318. Alternatively, either base 316 and/or sheath 312 may have any shape and are not limited to cylindrical shapes. In an exemplary embodiment, sheath 312 and base 316 are integrally formed together to form a second mating surface 322 that is substantially planar. Alternatively, second mating surface 322 may be formed with any contour that enables system 300 to function as described herein. Sheath 312 has a length SL that extends from second mating surface 322 to sheath end 314. Sheath 312 also includes an inner surface 324 that is formed with an inner diameter SD, and an outer surface 326 that is formed with an outer diameter SD'. Base 316 includes an inner surface 328 that is formed with an inner diameter BD and an outer surface 330 that is formed with an outer diameter BD'. In an exemplary embodiment, sheath inner diameter SD is smaller than base inner diameter BD, and sheath outer diameter SD' is smaller than base outer diameter BD'. Alternatively, in another embodiment, sheath inner diameter SD may be larger than, or approximately the same size as, base inner diameter BD, and/or sheath outer diameter SD' may be larger than, or approximately the same size as, base outer diameter BD'. As used herein, the term "diameter" is defined as a distance across any cross-sectional shape (e.g., a rectangle, a triangle, etc.) and is not limited to only describing a distance across circular or elliptical cross-sectional shapes.

In an exemplary embodiment, probe 304 is housed within sheath 312 (i.e., probe 304 is positioned in cavity 320) such that probe tip 310 is adjacent to sheath end 314 and such that sheath inner surface 324 contacts probe 304 to facilitate stabilizing probe 304 within cavity 320. In one embodiment, probe holder 306 includes a probe socket 332 that provides power to probe 304, electrically couples probe 304 to a control unit 334, and/or enables a user to adjust a position of probe 304 within probe holder 306. In one embodiment, probe holder 306 includes a locking mechanism 333 that enables a user to securely couple and/or selectively release probe 304 from within probe socket 332 and/or probe holder 306.

To inspect blade tip clearance 218 using inspection apparatus 302, at least a portion of probe 304 and probe holder 306 are inserted into aperture 220. In the exemplary embodiment, aperture first portion 222 engages sheath 312 to facilitate stabilizing sheath 312 therein. More specifically, in the exemplary embodiment, sheath 312 is inserted into aperture first portion 222 such that sheath end 314 does not extend through aperture first end 223 to facilitate preventing inspection apparatus 302 from damaging rotor blades 204. Moreover, in another embodiment, sheath 312 is inserted into aperture first portion 222 such that a predetermined distance X is maintained between sheath end 314 and aperture first end 223. In an exemplary embodiment, distance X is approximately .100 inches. Alternatively, distance X may be any length that enables inspection apparatus 302 to function as described herein.

In the exemplary embodiment, system 300 includes a spacer 336 that is positioned between first mating surface 226 and second mating surface 322 to facilitate maintaining distance X. Spacer 336 has a body 338 that is defined by a first end 340 and a second end 342. A passage 344 extends through body 338 from first end 340 to second end 342. Body 338 has a length L₃, an inner diameter ID that is longer than sheath outer diameter SD' to enable sheath 312 to be inserted through passage 344, and an outer diameter OD that is shorter than aperture second diameter D" to enable spacer 336 to be inserted into aperture second portion 224. In one embodiment, spacer outer diameter OD is substantially the same length as aperture second diameter D" such that an outer surface 346 of spacer 336 slidably contacts inner surface 221 of aperture second portion 224 when spacer 336 is inserted within aperture 220. In the exemplary embodiment, spacer first end 340 and spacer second end 342 are substantially planar such that spacer first end 340 is positioned substantially flat against first mating surface 226 and such that spacer second end 342 is positioned substantially flat against second mating surface 322 when spacer 336 is inserted within aperture 220 between casing 212 and inspection apparatus 302. Spacer 336 may include at least one magnet 348 adjacent to spacer first end 340 and/or to spacer second end 342 to enable spacer 336 to be removably coupled to first mating surface 226 and/or to second mating surface 322. In an exemplary embodiment, spacer body length L₃ is longer than second length L₂ of aperture second portion 224 to facilitate maintaining distance X.

Alternatively, system 300 includes a plurality of different spacers 336, wherein at least one spacer 336 is positioned for each desired inspection stage 232 (shown in Figure 2), such that distance X is facilitated to be maintained despite variations in casing thickness T at each desired inspection stage 232. For example, in an exemplary embodiment, system 300 includes three different spacers 336 that are each fabricated with a different length L₃ that facilitates their use at a particular desired inspection stage 232. In another alternative embodiment, system 300 does not include any spacers 336, and probe holder 306 is inserted into aperture 220 such that first mating surface 226 and second mating surface 322 are positioned substantially flat against one another.

In the exemplary embodiment, to facilitate reducing a possibility that inspection apparatus 302 will damage rotor blades 204 (shown in Figure 2), system 300 includes a test probe 350 that is inserted into aperture 220 before inspection apparatus 302 is inserted into aperture 220. Test probe 350 is fabricated with a length TL that is approximately the same as sheath length SL. In an exemplary embodiment, to facilitate preventing damage to rotor blades 204, test probe 350 is fabricated from a material that has a shearing strength of about 3,380 pounds per square inch (psi) (e.g., a high density polyethylene or a nylon material). Such a shearing strength ensures that test probe 350 will shear upon impact with rotor blades 204. In another embodiment, test probe 350 is fabricated from a material that has a shearing strength of less than about 4,000 psi.

System 300 also includes a probe control unit 334 that is communicatively coupled to probe 304 (e.g., via electric wiring 354, a wireless system, and/or any other suitable communication medium). Control unit 334 includes a control unit memory 356 and a control unit controller 358 that communicates with probe 304, communicates with a computer system 360, and/or enables data to be stored in control unit memory 356. As used herein, the term controller may include any processor-based or microprocessor-based system that includes microcontrollers, reduced instruction set circuits (RISC), application-specific integrated circuits (ASICs), logic circuits, and any other circuit or processor that is capable of executing the functions described herein. The examples provided above are exemplary only, and are not intended to limit in any way the definition and/or meaning of the term controller. Control unit 334 includes at least one communication device (e.g., a universal serial bus (USB) port 364, a wireless receiving/transmitting device, etc.) to communicate with computer system 360.

In one embodiment, control unit 334 is a handheld unit. Alternatively, control unit 334 may have any suitable size, shape, and/or mechanical configuration (e.g., wheels) that enables control unit 334 to be transported by a user from one inspection location to another inspection location. As used herein, the term "inspection location" refers to a location of each aperture 220 at each desired inspection stage 232. Control unit 334 may be powered using any suitable power source, across any suitable medium, such as battery power or hardwiring, for example. In the exemplary embodiment, control unit 334 includes at least one display 368 for displaying a user interface. Display 368 may utilize various display technologies, including, but not limited to, liquid crystal display (LCD), plasma, cathode ray tube (CRT), or analog-type display technologies. Display 368 displays information and/or at least one data entry field associated with a blade tip clearance 218 inspection operation (e.g., a stage number data entry field, a casing thickness data entry field, and/or an aperture number data entry field). In an exemplary embodiment, control unit 334 is programmed to transmit and/or receive signals from the source and/or the detector that are indicative of emitted and/or detected electromagnetic energy. In an exemplary embodiment, control unit controller 358 is programmed to process the signals received from probe 304, generate at least one blade tip clearance reading, and/or store, in control unit memory 356, at least one record for each reading that occurs during a given operational period.

In the exemplary embodiment, computer system 360, or any component thereof, is located remotely from control unit. System 360 may include a computer, an input device, a display unit, and an interface, for example, to access the Internet. Computer system 360 may also include a processor, which may be coupled to a communication bus. The computer may include a memory, which may include a Random Access Memory (RAM) and a Read Only Memory (ROM), as well as a storage device, which may be a hard disk drive or a removable storage drive such as a floppy disk drive, an optical disk drive, and so forth. The storage device is configured to load computer programs and/or other instructions into the computer system. As used herein, the term "processor" is not limited to only integrated circuits referred to in the art as a processor, but broadly refers to a computer, a microcontroller, a microcomputer, microprocessor, a programmable logic controller, an application specific integrated circuit and any other programmable circuit.

Computer system 360 executes instructions, stored in one or more storage elements, to process input data. The storage elements may also hold data or other information, as desired or required, and may be in the form of an information source or a physical memory element in the processing machine. The set of instructions may include various commands that instruct the computer system to perform specific operations, such as the processes of a method. The set of instructions may be in the form of a software program. The software may be in various forms, such as system software or application software. Further, the software may be in the form of a collection of separate programs, a program module within a larger program, or a portion of a program module. The software may also include modular programming in the form of object-oriented programming. The processing of input data by the processing machine may be in response to user commands, to results of previous processing, or to a request made by another processing machine.

As used herein, the term 'software' includes any computer program that is stored in the memory, to be executed by a computer, which includes RAM memory, ROM memory, EPROM memory, EEPROM memory, and non-volatile RAM (NVRAM) memory. The memory types mentioned above are only exemplary and do not limit the types of memory used to store computer programs.

In an exemplary embodiment, control unit 334 communicates with computer system 360 (i.e., via any suitable communication device and/or communication medium 370, such as, for example, a copper cable, a fiber optic cable, a radio frequency or other method of wireless communication, and/or any combination thereof). In one embodiment, computer system 360 is programmed to receive at least one record from control unit 334, store the records in the computer system memory, process the records, and/or output blade tip clearance data to a user (i.e. statistical data via a spreadsheet) using the records. In another embodiment, computer system 360 outputs at least the following data: (1) inspection location stage number; (2) inspection location aperture number; (3) inspection location casing thickness; (4) probe electromagnetic emission/detection frequency; (5) number of electromagnetic records (i.e., emissions/detections) collected for each rotor blade at each inspection location; (6) average blade tip clearance for each rotor blade at each inspection location; and/or (7) average blade tip clearance for all rotor blades at each desired inspection stage. In an alternative embodiment, system 300 does not include computer system 360, and control unit 334 is configured to perform the operations of computer system 360, as described herein.

In an exemplary embodiment, system 300 includes an electric rotating device (not shown) (e.g., an electric turn gear) for rotating rotor blades 204 during an inspection operation. In one embodiment, the rotating device rotates rotor blades 204 at approximately seven revolutions per minute (rpm) during an inspection operation. In another embodiment, the rotating device may rotate rotor blades 204 at any rotational speed. During rotation of rotor blades 204, a user inserts inspection apparatus 302 into casing 212 at each inspection location. Prior to inserting inspection apparatus 302 in a desired aperture 220, the user inputs inspection location data into control unit user interface 368 (e.g., inspection location stage number, inspection location aperture number, inspection location casing thickness, etc.). After entering inspection location data, the user inserts spacer 336 into aperture second portion 224 and inserts test probe 350 through spacer 336 and into aperture first portion 222 to determine if the proper spacer 336 has been selected. If test probe 350 contacts rotor blades 204, the user inserts a different spacer 336 that has a different length L₃ into aperture second portion 224 and reinserts test probe 350 through spacer 336 and into aperture first portion 222 to determine whether test probe 350 contacts rotor blades 204. Once the user identifies the proper spacer 336 that prevents test probe 350 from contacting rotor blades 204, the user removes test probe 350 from spacer 336 and inserts inspection apparatus 302 (i.e., probe 304 and sheath 312) through spacer 336 and into aperture first portion 222.

After inserting inspection apparatus 302 through spacer 336 and into aperture first portion 222, the user instructs control unit 334 to begin a blade tip clearance inspection operation of blade tip clearance 218 (i.e., by interacting with user interface 368). Control unit 334 and probe 304 transmit and/or receive signals that are indicative of electromagnetic energy emitted and/or received by probe 304. Control unit 334 stores a plurality of blade tip clearance records for each blade 204 at a particular inspection location (e.g., control unit 334 may store about fifteen records per blade 204 for each inspection location). After inspecting blade tip clearance 218 at each inspection location, control unit 334 transmits each record stored during the inspection operation to computer system 360, and computer system 360 stores the records and outputs blade tip clearance data to the user.

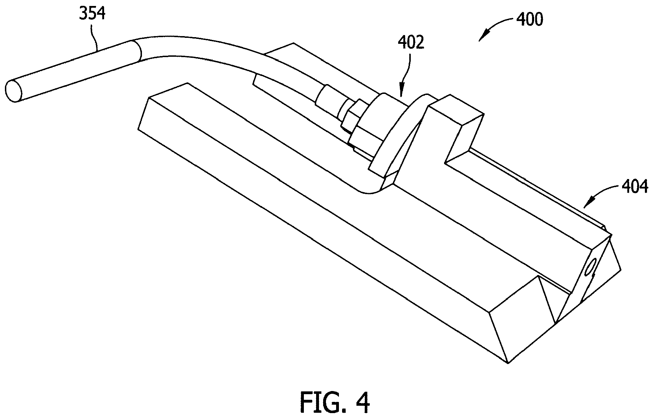

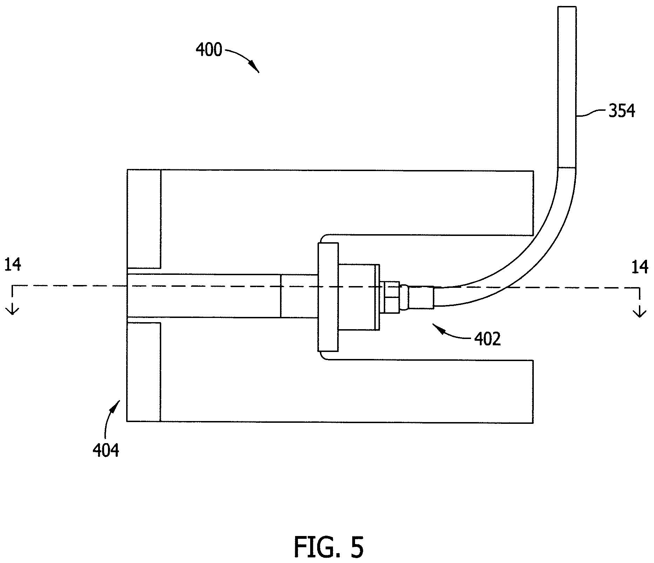

Figure 4 is a perspective view of an alternative embodiment of a system 400 that may be used for inspecting blade tip clearance 218. Figure 5 is a top view of system 400. In the exemplary embodiment, system 400 is configured for inspecting blade tip clearance 218 (e.g., a change in blade tip clearance 218) during blending of blade tips 210, as described in more detail below. In the exemplary embodiment, system 400 includes a probe assembly 402 and a probe holder assembly 404 that enables probe assembly 402 to be removably coupled thereto.

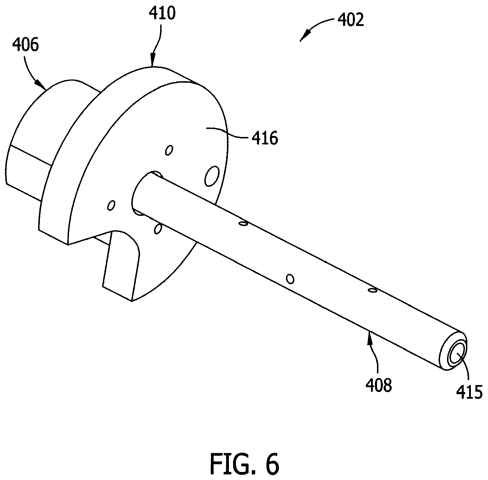

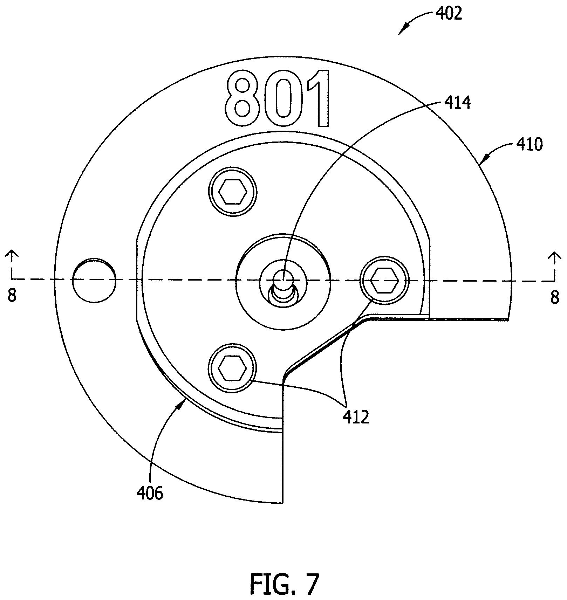

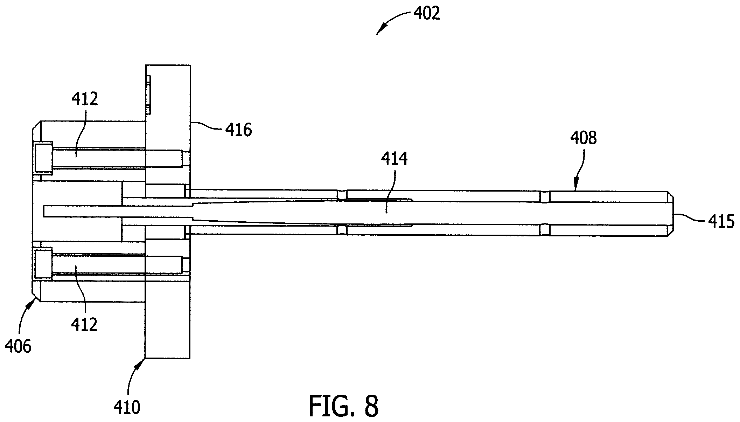

Figures 6 and 7 are respective perspective and back views of probe assembly 402. Figure 8 is a cross-sectional view of probe assembly 402 taken along line 8-8. In the exemplary embodiment, probe assembly 402 includes a socket 406, a sheath 408 integrally formed with and extending from socket 406, a plate 410 coupled to socket 406 and extending about sheath 408 (e.g., using a plurality of fasteners 412), and a probe 414 inserted at least partially into sheath 408. Socket 406 enables power to be supplied to probe 414 and/or enables electrically coupling probe 414 to control unit 334. Sheath 408 facilitates protecting probe 414 from being contacted and damaged during use, and also facilitates stabilizing probe 414 in its extension from socket 406. In the exemplary embodiment, probe 414 has an elongated shape and a tip 415 that is configured to emit electromagnetic energy and/or detect reflected electromagnetic energy. In one embodiment, probe 414 is an optical probe that emits and/or detects visible light (e.g., white light). In another embodiment, probe 414 may emit and/or detect any wavelength of electromagnetic energy. Alternatively, socket 406 and plate 410 may be integrally formed together as a unitary member, and/or socket 406 and sheath 408 may be formed separately from, and coupled to, one another in any suitable manner.

In the exemplary embodiment, plate 410 is disc-shaped and includes a front face 416 that abuts against probe holder assembly 404. Moreover, at least a portion of plate 410 (e.g., front face 416) is fabricated from a metallic material to enable probe assembly 402 to be magnetically coupled to probe holder assembly 404 in a detachable manner, as described in more detail below. Alternatively, plate 410 may have any suitable configuration and may be fabricated from any suitable material that enables probe assembly 402 to function as described herein (e.g., plate 410 may have any suitable shape and may be fabricated from a non-metallic material).

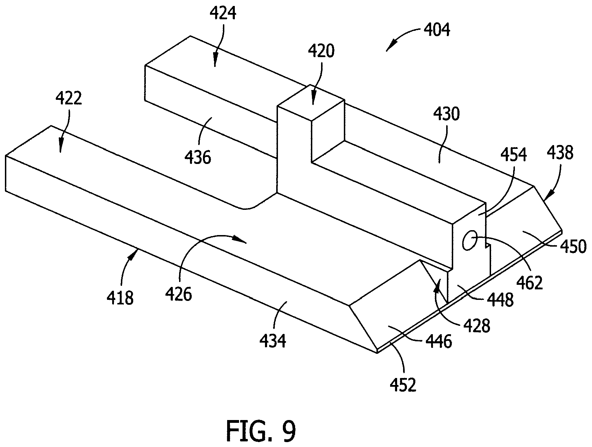

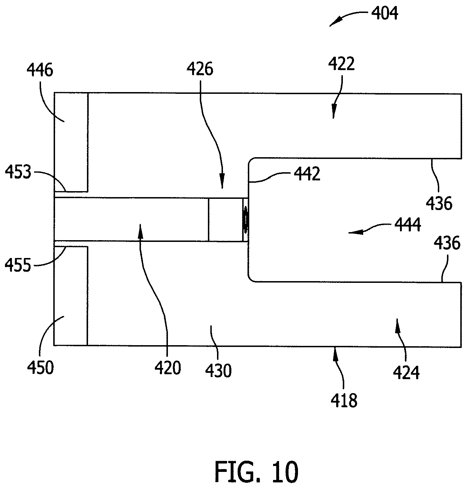

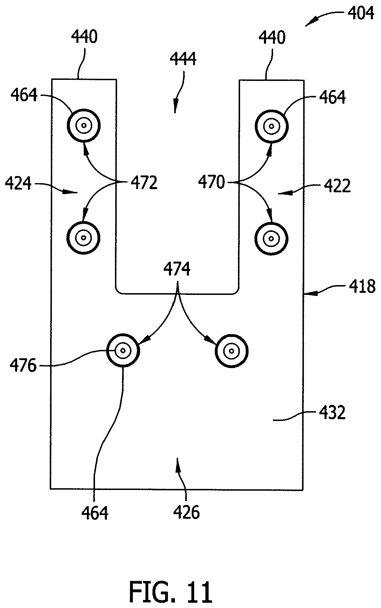

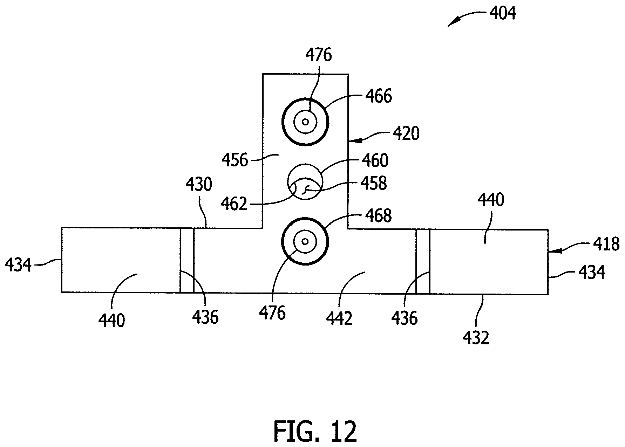

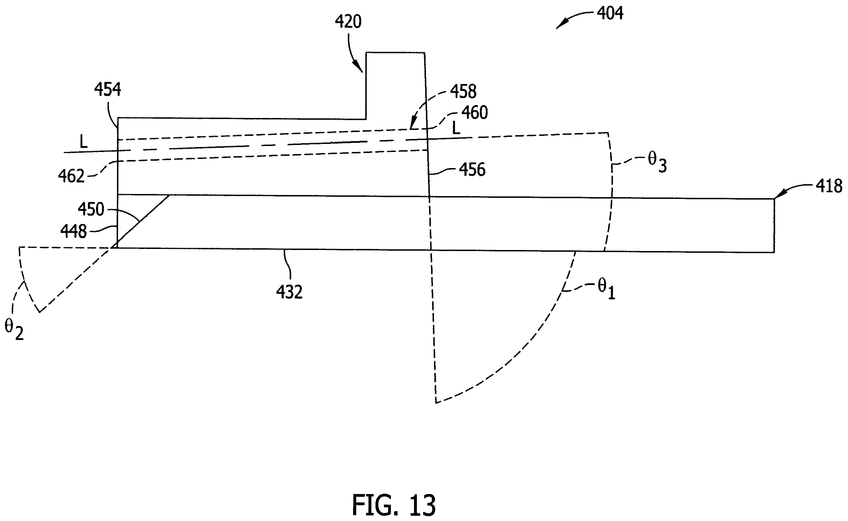

Figure 9 is a perspective view of probe holder assembly 404. Figures 10, 11, 12, and 13 are respective top, bottom, rear, and side views of probe holder assembly 404. In the exemplary embodiment, probe holder assembly 404 includes a support 418 and a cover 420 that are integrally formed together as a unitary member. In other embodiments, support 418 and cover 420 may be formed separately, and coupled together using any suitable coupling mechanism.

In the exemplary embodiment, support 418 has a generally U-shaped planform and includes a first leg 422, a second leg 424, and a base 426 extending between first leg 422 and second leg 424. Moreover, a support ledge 428 extends from base 426 opposite legs 422 and 424. Support 418 also includes a top surface 430, a bottom surface 432, a pair of outer side surfaces 434, a pair of inner side surfaces 436, a plurality of front surfaces 438, a pair of distal back surfaces 440, and a proximal back surface 442. Inner side surfaces 436 and proximal back surface 442 collectively define the concavity 444 of the U-shaped planform. In the exemplary embodiment, top surface 430 and bottom surface 432 are substantially parallel to one another, and distal back surfaces 440 and outer side surfaces 434 are substantially perpendicular to top surface 430 and to bottom surface 432. In other embodiments, top surface 430, bottom surface 432, distal back surfaces 440, and outer side surfaces 434 may have any orientations relative to one another that enable support 418 to function as described herein. In the exemplary embodiment, proximal back surface 442 is substantially planar and is oriented obliquely relative to surfaces 430 and 432 such that back surface 442 forms an acute angle θ₁ (e.g., between about 85° and about 89°) with bottom surface 432. In other embodiments, back surface 442 may have any suitable orientation that enables support 418 to function as described herein.

In the exemplary embodiment, front surfaces 438 include a first segment 446, a second segment 448, and a third segment 450 that collectively define a front edge 452 of support 418. First and third segments 446 and 450 are spaced a distance apart on opposite sides 453 and 455 of support ledge 428, and second segment 448 is formed on support ledge 428 and between segments 446 and 450. In the exemplary embodiment, first and third segments 446 and 450, respectively, are substantially planar and are each oriented obliquely relative to surfaces 430 and 432 such that segments 446 and 450 form acute angles θ₂ (e.g., about 45°) with bottom surface 432. Second segment 448 is substantially perpendicular to surfaces 430 and 432. In other embodiments, first, second, and third segments 446, 448, and 450, respectively, may be arranged in any orientation relative to surfaces 430 and 432 that enables support 418 to function as described herein. Alternatively, support 418 may have any suitable configuration that enables support 418 to function as described herein (e.g., support 418 may not be generally U-shaped, may not have support ledge 428, and/or may have a front surface that is not segmented).

In the exemplary embodiment, cover 420 is generally L-shaped and includes a substantially planar front surface 454 and a substantially planar back surface 456. Cover 420 extends along base 426 and support ledge 428 such that back surface 456 is substantially co-planar with proximal back surface 442 and such that front surface 454 is substantially co-planar with second segment 448. Thus, back surface 456 is oriented at approximately the same angle (i.e., angle θ₁) as proximal back surface 442, and front surface 454 is oriented at approximately the same angle (i.e., 90°) as second segment 448. In other embodiments, surfaces 454 and 456 may be oriented in any orientation that enables cover 420 to function as described herein. In the exemplary embodiment, cover 420 defines a passage 458 therein that is sized to receive sheath 408. Specifically, passage 458 extends from a first end 460, located on back surface 456, to a second end 462, located on front surface 454. Moreover, passage 458 has a longitudinal axis L that is oriented substantially perpendicular to back surface 456 such that longitudinal axis L is oriented at an angle θ₃ relative to bottom surface 432. Angle θ₃ is complementary to angle θ₁. Alternatively, passage 458 may have any orientation that enables cover 420 to function as described herein.

In the exemplary embodiment, probe holder assembly 404 also includes a plurality of first magnetic portions 464 arranged on bottom surface 432, a second magnetic portion 466 arranged on back surface 456 above first end 460 of passage 458, and a third magnetic portion 468 arranged partially on proximal back surface 442 and partially on back surface 456, below first end 460 of passage 458. A first pair 470 of first magnetic portions 464 is located on first leg 422, a second pair 472 of first magnetic portions 464 is located on second leg 424, and a third pair 474 of first magnetic portions 464 is located on base 426 such that first magnetic portions 464 have a generally U-shaped arrangement on bottom surface 432. In other embodiments, support 418 may have any suitable number of magnetic portions 464, 466, and/or 468 arranged in any suitable manner that enables support 418 to function as described herein. In the exemplary embodiment, magnetic portions 464, 466, and 468 are formed separately from, and coupled to, support 418 and cover 420 via suitable fasteners 476. In some embodiments, magnetic portions 464, 466, and/or 468 may be formed integrally with support 418 and/or cover 420.

In the exemplary embodiment, within system 400, probe control unit 334 is communicatively coupled to probe (e.g., via electric wiring 354, a wireless system, and/or any other suitable communication medium, as described above). Control unit 334 may include control unit memory 356 and control unit controller 358 that communicates with probe 414, communicates with computer system 360, and/or that enables data to be stored in control unit memory 356. Control unit 334 may be configured to facilitate inspecting blade tip clearance 218 in any suitable manner, and the configuration of control unit 334 is not limited to the inspection techniques described above for use with system 300.

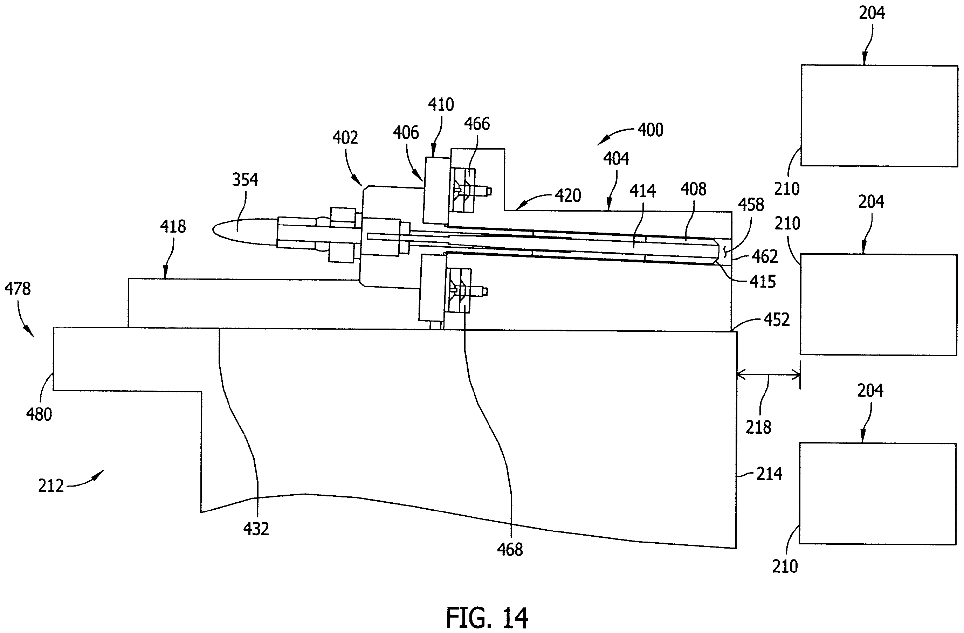

Figure 14 is a cross-sectional view of system 400 taken along line 14-14 (Figure 5) and coupled to casing 212. When assembled in system 400, probe 414 and wiring 354 are coupled to socket 406 such that wiring 354 transfers electromagnetic energy to probe 414 for use in inspecting tip clearance 218. Probe 414 and sheath 408 are inserted into passage 458 of cover 420 such that tip 415 is spaced a distance from second end 462 of passage 458. Plate 410, which is at least partially fabricated from a metallic material, is magnetically coupled to cover 420 and support 418 via second magnetic portion 466 and third magnetic portion 468, respectively, such that probe assembly 402 is detachably coupled to probe holder assembly 404.

To operate the exemplary embodiment of system 400, a first segment (e.g., a top half (not shown)) of casing 212 is detached from a second segment (e.g., a bottom half 478) of casing 212 such that rotor blades 204 are accessible. With the top half of casing 212 removed in the exemplary embodiment, inner surface 214 of bottom half 478 is at least partially exposed. System 400 is then coupled to bottom half 478 such that bottom surface 432 of support 418 is seated on bottom half 478 with front edge 452 of support 418 aligned with (e.g., slightly offset from) inner surface 214 and with tip 415 of probe 414 oriented toward rotor blades 204. First magnetic portions 464 on bottom surface 432 of support 418 facilitate detachably coupling support 418 to casing 212, and legs 422 and 424 facilitate clamping probe holder assembly 404 to bottom half 478 (e.g., legs 422 and 424 may be clamped to a flange 480 that is used to fasten the top half of casing 212 to casing bottom half 478). Because first and third segments 446 and 450 of support 418 are oriented at angle θ₂, it is easier to align front edge 452 with inner surface 214. Because back surface 456 and proximal back surface 442 are oriented at angle θ₁, and because longitudinal axis L of passage 458 is oriented at complementary angle θ₃, it is easier to maintain probe assembly 402 coupled to cover 420, and it is easier to achieve an optimal orientation of probe 414 relative to rotor blades 204, thereby facilitating more accurate inspection of tip clearance 218. Also, because front surface 454 is oriented at approximately the same angle as second segment 448, probe 414 can be extended closer to front edge 452 and, therefore, closer to rotor blades 204, while being sufficiently spaced apart therefrom to protect probe 414 from being damaged.

During operation, when system 400 is coupled to casing bottom half 478, a user may operate an electric rotating device (e.g., an electric turn gear) to rotate rotor blades 204. While rotor blades 204 are being rotated and while system 400 is inspecting blade tip clearance 218, a blending apparatus (e.g., a belt grinder) may be used to blend blade tips 210. For example, when a stage 202 of rotor blades 204 is rotated by the electric turn gear, a belt grinder may simultaneously grind blade tips 210 while the user is operating system 400 to inspect changes in blade tip clearances 218 of the entire stage 202 during the grinding operation (e.g., the user is evaluating output data from control unit 334 to make real-time determinations as to when blade tip clearances 218 are acceptable across the entire stage 202 and, therefore, grinding of the stage 202 ceases). When operating system 400, the user may also interact with control unit 334 to instruct system 400 to process and store any detected change in tip clearance 218 as material is being removed from blade tips 210 via the blending apparatus. In other embodiments, system 400 may be operated in any suitable manner to inspect blade tip clearance using any suitable techniques. As described herein, system 400 therefore facilitates measuring blade tip clearance 218 using less time consuming and more reliable tip clearance inspection techniques.

The methods and systems described herein facilitate inspection of gas turbine engine compressor rotor blade tip clearance. More specifically, the methods and systems described herein facilitate minimizing variability in blade tip clearance measurements by providing automated and repeatable inspection techniques, such that an engine performance data quality increases to enable fundamental engineering decisions to be made regarding optimizing engine performance and energy output. Additionally, the methods and systems described herein facilitate inspection of blade tip clearance while the engine casing is completely assembled and/or while the engine casing is disassembled. Also, the methods and systems described herein facilitate inspection of blade tip clearances as the blade tips are being blended, thereby enabling real-time determinations to be made as to when blade tip clearances are within tolerances. Moreover, the methods and systems described herein facilitate reducing engine inspection cycle time, thereby decreasing inspection costs.

As will be appreciated by one skilled in the art and supported on the foregoing specification, the above-described embodiments of the invention may be implemented using computer programming or engineering techniques including computer software, firmware, hardware, or any combination or subset thereof, wherein one technical effect is to facilitate inspecting blade tip clearance. Any resulting program, having computer-readable code means, may be embodied or provided within one or more computer-readable media, thereby making a computer program product (i.e., an article of manufacture, according to the discussed embodiments of the invention). The computer readable media may be, for example, but is not limited to, a fixed (hard) drive, diskette, optical disk, magnetic tape, semiconductor memory such as read-only memory (ROM), and/or any transmitting/receiving medium such as the Internet or other communication network or link. The article of manufacture containing the computer code may be made and/or used by executing the code directly from one medium, by copying the code from one medium to another medium, and/or by transmitting the code over a network.

Exemplary embodiments of methods and systems for inspecting blade tip clearance are described above in detail. The methods and systems for inspecting blade tip clearance are not limited to the specific embodiments described herein, but rather, components of the methods and systems may be utilized independently and separately from other components described herein. For example, the methods and systems described herein may have other industrial and/or consumer applications and are not limited to practice with only gas turbine engines as described herein. Rather, the present invention can be implemented and utilized in connection with many other industries.

While the invention has been described in terms of various specific embodiments, those skilled in the art will recognize that the invention can be practiced with modification within the scope of the claims.

## Claims

1. A system (400) for use in inspecting the blade tips (210) of rotor blades (204), said system comprising:
a probe holder assembly (404); and
a probe assembly (402) comprising an electromagnetic probe (414), said electromagnetic probe is sized for insertion into said probe holder assembly and is configured to emit electromagnetic energy from said probe holder assembly for use in inspecting a tip clearance (218) defined between the rotor blades and a casing (212) extending outward from the rotor blades, said probe holder assembly removably coupled to the casing to facilitate inspection of the blade tip clearance using said electromagnetic probe; **characterized in that**
said probe holder assembly (404) comprises a magnetic portion (466, 468) configured to removably couple said probe assembly (402) to said probe holder assembly.

2. A system (400) in accordance with Claim 1, wherein said probe holder assembly (404) comprises a magnetic portion (464) configured to magnetically couple said probe holder assembly to the casing (212).

3. A system (400) in accordance with any of Claims 1 or 2, wherein said probe holder assembly (404) has a generally U-shaped planform, said probe holder assembly is configured to be clamped to the casing (212).

4. A system (400) in accordance with any of Claims 1 to 3, wherein said probe holder assembly (404) comprises a passage (458), said probe assembly (402) sized to be received within said passage.

5. A system (400) in accordance with Claim 4, wherein said passage (458) has a longitudinal axis (L), said probe holder assembly (404) further comprising a bottom surface (432) and a back surface (442, 456), said back surface defining a first end (460) of said passage and being oriented acutely relative to said bottom surface, said longitudinal axis is substantially perpendicular to said back surface.

6. A system (400) in accordance with any of Claims 1 to 5, wherein the casing (212) has an inner surface (214), said probe holder assembly (404) comprising a bottom surface (432), a front surface segment (446, 450), and a front edge (452) coupling said bottom surface to said front surface segment, said front surface segment oriented acutely relative to said bottom surface at said front edge.

7. A method for use in assembling a blade tip (210) clearance inspection system, said method comprising:
providing a probe holder assembly (404);
providing a probe assembly (402) including an electromagnetic probe (414), wherein the electromagnetic probe (414) is sized to be inserted into the probe holder assembly (404) and is configured to emit electromagnetic energy from the probe holder assembly (404) during a blade tip clearance inspection (218); and
removably coupling the probe holder assembly (404) to a casing extending about the rotor blades (204) to enable the electromagnetic probe (414) to inspect the blade tip clearance (218), **characterized by** the steps of
providing a probe holder assembly (404) comprises providing the probe holder assembly (404) with a magnetic portion (464), said method further comprising magnetically coupling the probe assembly (404) to the probe holder assembly (404) using the magnetic portion (464).

8. A method in accordance with Claim 7, wherein providing a probe holder assembly (404) comprises providing the probe holder assembly (404) with a magnetic portion (464), said removably coupling the probe holder assembly (404) to a casing (212) comprising magnetically coupling the probe holder assembly (404) to the casing (212) using the magnetic portion (464).

9. A method in accordance with Claim 7 or 8, wherein providing a probe holder assembly (404) comprises providing the probe holder assembly with a generally U-shaped planform having a leg (422), said removably coupling the probe holder assembly (404) to a casing (212) comprising clamping the probe holder assembly (404) to the casing (212) using the leg (422).

10. A method in accordance with Claim 7 or 8, wherein providing a probe holder assembly (404) comprises providing the probe holder assembly with a passage (458), said method further comprising removably inserting the probe assembly (404) into the passage (458) of the probe holder assembly (404).

11. A method in accordance with Claim 10, wherein providing a probe holder assembly (404) further comprises providing the probe holder assembly with a bottom surface (432), said removably inserting the probe assembly (402) into the passage (458) of the probe holder assembly (404) comprising inserting the probe assembly (402) into the passage (458) such that the probe (414) is acutely oriented relative to the bottom surface of the probe holder assembly (404).

12. A method in accordance with any of Claims 7 to 11, wherein the casing (212) has an inner surface (214), said providing a probe holder assembly (404) comprising providing the probe holder assembly (404) with a bottom surface (432), a front surface segment (446), and a front edge (452) coupling the bottom surface (432) to the front surface segment (446), wherein the front surface segment (446) is oriented acutely relative to the bottom surface (432) at the front edge (452), said method further comprising aligning the probe holder assembly (404) with the inner surface (214) using the front edge (452).

## Patentansprüche

1. System (400) zur Verwendung bei der Prüfung der Rotorspitzen (210) von Rotorblättern (204), wobei das System Folgendes umfasst:
eine Sondenhalterkonstruktion (404); und
eine Sondenkonstruktion (402) mit einer elektromagnetischen Sonde (414), wobei die elektromagnetische Sonde zum Einführen in die Sondenhalterkonstruktion bemessen ist und zum Emittieren elektromagnetischer Energie von der Sondenhalterkonstruktion zur Verwendung beim Prüfen eines zwischen den Rotorblättern und einem sich von den Rotorblättern nach außen erstreckenden Gehäuse (212) definierten Spitzenabstands (218) konfiguriert ist, wobei die Sondenhalterkonstruktion entfernbar mit dem Gehäuse verbunden ist, um die Prüfung des Rotorspitzenabstandes unter Verwendung der elektromagnetischen Sonde zu erleichtern; **dadurch gekennzeichnet, dass**
die Sondenhalterkonstruktion (404) einen magnetischen Abschnitt (466, 468) umfasst, der konfiguriert ist, um die Sondenkonstruktion (402) entfernbar mit der Sondenhalterkonstruktion zu koppeln.

2. System (400) nach Anspruch 1, wobei die Sondenhalterkonstruktion (404) einen magnetischen Abschnitt (464) umfasst, der konfiguriert ist, um die Sondenhalterkonstruktion magnetisch mit dem Gehäuse (212) zu koppeln.

3. System (400) nach einem der Ansprüche 1 oder 2, wobei die Sondenhalterkonstruktion (404) einen im Wesentlichen U-förmigen Grundriss aufweist, wobei die Sondenhalterkonstruktion so konfiguriert ist, dass sie an dem Gehäuse (212) festgeklemmt wird.

4. System (400) nach einem der Ansprüche 1 bis 3, wobei die Sondenhalterkonstruktion (404) einen Durchgang (458) umfasst, wobei die Sondenkonstruktion (402) bemessen ist, um in dem Durchgang aufgenommen zu werden.

5. System (400) nach Anspruch 4, wobei der Durchgang (458) eine Längsachse (L) aufweist, wobei die Sondenhalterkonstruktion (404) weiter eine Bodenfläche (432) und eine Rückfläche (442, 456) umfasst, wobei die Rückfläche ein erstes Ende (460) des Durchgangs definiert und in Bezug auf die Bodenfläche spitz ausgerichtet ist, wobei die Längsachse im Wesentlichen senkrecht zu der Rückfläche ist.

6. System (400) nach einem der Ansprüche 1 bis 5, wobei das Gehäuse (212) eine Innenfläche (214) aufweist, wobei die Sondenhalterkonstruktion (404) eine Bodenfläche (432), ein Vorderflächensegment (446, 450) und eine Vorderkante (452) aufweist, die die Bodenfläche mit dem Vorderflächensegment koppelt, wobei das Vorderflächensegment in Bezug auf die Bodenfläche an der Vorderkante spitz ausgerichtet ist.

7. Verfahren zur Verwendung beim Zusammenbau eines Rotorspitzenabstandprüfsystems (210), wobei das Verfahren Folgendes umfasst:
Bereitstellen einer Sondenhalterkonstruktion (404);
Bereitstellen einer Sondenkonstruktion (402) einschließlich einer elektromagnetischen Sonde (414), wobei die elektromagnetische Sonde (414) bemessen ist, um in die Sondenhalterkonstruktion (404) eingeführt zu werden, und konfiguriert ist, elektromagnetische Energie von der Sondenhalterkonstruktion (404) während einer Rotorspitzenabstandsprüfung (218) abzugeben; und
entfernbar Koppeln der Sondenhalterkonstruktion (404) mit einem Gehäuse, das sich um die Rotorblätter (204) erstreckt, um es der elektromagnetischen Sonde (414) zu ermöglichen, den Rotorspitzenabstand (218) zu prüfen, **gekennzeichnet durch** die folgenden Schritte
Bereitstellen einer Sondenhalterkonstruktion (404), das das Bereitstellen der Sondenhalterkonstruktion (404) mit einem magnetischen Abschnitt (464) umfasst, wobei das Verfahren weiter das magnetische Koppeln der Sondenkonstruktion (404) an die Sondenhalterkonstruktion (404) unter Verwendung des magnetischen Abschnitts (464) umfasst.

8. Verfahren nach Anspruch 7, wobei das Bereitstellen einer Sondenhalterkonstruktion (404) das Bereitstellen der Sondenhalterkonstruktion (404) mit einem magnetischen Abschnitt (464) umfasst, wobei die Sondenhalterkonstruktion (404) entfernbar mit einem Gehäuse (212) gekoppelt ist, dass die magnetische Kopplung der Sondenhalterkonstruktion (404) mit dem Gehäuse (212) unter Verwendung des magnetischen Abschnitts (464) umfasst.

9. Verfahren nach Anspruch 7 oder 8, wobei das Bereitstellen einer Sondenhalterkonstruktion (404) das Bereitstellen der Sondenhalterkonstruktion mit einem im Wesentlichen U-förmigen Grundriss mit einem Schenkel (422) umfasst, wobei die Sondenhalterkonstruktion (404) entfernbar mit einem Gehäuse (212) gekoppelt ist, das das Festklemmen der Sondenhalterkonstruktion (404) an dem Gehäuse (212) unter Verwendung des Schenkels (422) umfasst.

10. Verfahren nach Anspruch 7 oder 8, wobei das Bereitstellen einer Sondenhalterkonstruktion (404) das Bereitstellen der Sondenhalterkonstruktion mit einem Durchgang (458) umfasst, wobei das Verfahren weiter das entfernbare Einführen der Sondenkonstruktion (404) in den Durchgang (458) der Sondenhalterkonstruktion (404) umfasst.

11. Verfahren nach Anspruch 10, wobei das Bereitstellen einer Sondenhalterkonstruktion (404) weiter das Bereitstellen der Sondenhalterkonstruktion mit einer Bodenfläche (432) umfasst, wobei das entfernbare Einsetzen der Sondenkonstruktion (402) in den Durchgang (458) der Sondenhalterkonstruktion (404) das Einführen der Sondenkonstruktion (402) in den Durchgang (458) umfasst, sodass die Sonde (414) in Bezug auf die Bodenfläche der Sondenhalterkonstruktion (404) spitz ausgerichtet ist.

12. Verfahren nach einem der Ansprüche 7 bis 11, wobei das Gehäuse (212) eine Innenfläche (214) aufweist, wobei das Bereitstellen einer Sondenhalterkonstruktion (404) das Bereitstellen der Sondenhalterkonstruktion (404) mit einer Bodenfläche (432), einem Vorderflächensegment (446) und einer Vorderkante (452) umfasst, die die Bodenfläche (432) mit dem Vorderflächensegment (446) koppelt, wobei das Vorderflächensegment (446) in Bezug auf die Bodenfläche (432) an der Vorderkante (452) spitz ausgerichtet ist, wobei das Verfahren weiter das Ausrichten der Sondenhalterkonstruktion (404) mit der Innenfläche (214) unter Verwendung der Vorderkante (452) umfasst.

## Revendications

1. Système (400) pour utilisation dans l'inspection des embouts d'aube (210) de pales de rotor (204), ledit système comprenant :
un ensemble porte-sonde (404) ; et
un ensemble de sonde (402) comprenant une sonde électromagnétique (414), ladite sonde électromagnétique étant calibrée pour une insertion dans ledit ensemble porte-sonde et étant configurée pour émettre de l'énergie électromagnétique dudit ensemble porte-sonde pour utilisation dans l'inspection d'un jeu d'embouts (218) défini entre les pales de rotor et un carter (212) s'étendant vers l'extérieur des pales de rotor, ledit ensemble porte-sonde étant couplé de manière amovible au carter pour faciliter l'inspection du jeu d'embouts d'aube en utilisant ladite sonde électromagnétique ; **caractérisé en ce que**
ledit ensemble porte-sonde (404) comprend une partie magnétique (466, 468) configurée pour coupler de manière amovible l'ensemble de sonde (402) audit ensemble porte-sonde.

2. Système (400) selon la revendication 1, dans lequel ledit ensemble porte-sonde (404) comprend une partie magnétique (464) configurée pour coupler magnétiquement l'ensemble porte-sonde au carter (212).

3. Système (400) selon l'une quelconque des revendications 1 ou 2, dans lequel ledit ensemble porte-sonde (404) a une forme plane de forme généralement en U, ledit ensemble porte-sonde étant configuré pour être bloqué au carter (212).

4. Système (400) selon l'une quelconque des revendications 1 à 3, dans lequel ledit ensemble porte-sonde (404) comprend un passage (458), ledit ensemble de sonde (402) étant calibré pour être reçu dans ledit passage.

5. Système (400) selon la revendication 4, dans lequel ledit passage (458) a un axe longitudinal (L), ledit ensemble porte-sonde (404) comprenant en outre une surface inférieure (432) et une surface arrière (442, 456), ladite surface arrière définissant une première extrémité (460) dudit passage et étant orientée selon un angle aigu par rapport à ladite surface inférieure, ledit axe longitudinal étant sensiblement perpendiculaire à ladite surface arrière.

6. Système (400) selon l'une quelconque des revendications 1 à 5, dans lequel le carter (212) a une surface interne (214), ledit ensemble porte-sonde (404) comprenant une surface inférieure (432), un segment de surface frontal (446, 450), et un bord frontal (452) couplant ladite surface inférieure audit segment de surface frontal, ledit segment de surface frontal étant orienté selon un angle aigu par rapport à ladite surface inférieure sur ledit bord frontal.

7. Procédé pour utilisation dans l'assemblage d'un système d'inspection de jeu d'embouts d'aube (210), ledit procédé comprenant les étapes consistant à :
fournir un ensemble porte-sonde (404) ;
fournir un ensemble de sonde (402) incluant une sonde électromagnétique (414), dans lequel la sonde électromagnétique (414) est calibrée pour être insérée dans l'ensemble porte-sonde (404) et est configurée pour émettre de l'énergie électromagnétique de l'ensemble porte-sonde (404) au cours d'une inspection de jeu d'embouts d'aube (218) ; et
coupler de manière amovible l'ensemble porte-sonde (404) à un carter s'étendant autour des pales de rotor (204) pour permettre à la sonde électromagnétique (414) d'inspecter le jeu d'embouts d'aube (218), **caractérisé par** les étapes consistant à
fournir un ensemble porte-sonde (404) comprenant la fourniture de l'ensemble porte-sonde (404) avec une partie magnétique (464), ledit procédé comprenant en outre le couplage magnétique de l'ensemble de sonde (404) à l'ensemble porte-sonde (404) en utilisant la partie magnétique (464).

8. Procédé selon la revendication 7, dans lequel la fourniture d'un ensemble porte-sonde (404) comprend la fourniture de l'ensemble porte-sonde (404) avec une partie magnétique (464), ledit couplage amovible de l'ensemble porte-sonde (404) à un carter (212) comprenant le couplage magnétique de l'ensemble porte-sonde (404) au carter (212) en utilisant la partie magnétique (464).

9. Procédé selon la revendication 7 ou 8, dans lequel la fourniture d'un ensemble porte-sonde (404) comprend la fourniture de l'ensemble porte-sonde avec une forme plane de forme généralement en U ayant une branche (422), ledit couplage amovible de l'ensemble porte-sonde (404) à un carter (212) comprenant le blocage de l'ensemble porte-sonde (404) au carter (212) en utilisant la branche (422).

10. Procédé selon la revendication 7 ou 8, dans lequel la fourniture d'un ensemble porte-sonde (404) comprend la fourniture de l'ensemble porte-sonde avec un passage (458), ledit procédé comprenant en outre l'insertion amovible de l'ensemble de sonde (404) dans le passage (458) de l'ensemble porte-sonde (404).

11. Procédé selon la revendication 10, dans lequel la fourniture d'un ensemble porte-sonde (404) comprend en outre la fourniture de l'ensemble porte-sonde avec une surface inférieure (432), ladite insertion amovible de l'ensemble de sonde (402) dans le passage (458) de l'ensemble porte-sonde (404) comprenant l'insertion de l'ensemble de sonde (402) dans le passage (458) de sorte que la sonde (414) soit orientée selon un angle aigu par rapport à la surface inférieure de l'ensemble porte-sonde (404).

12. Procédé selon l'une quelconque des revendications 7 à 11, dans lequel le carter (212) a une surface interne (214), ladite fourniture d'un ensemble porte-sonde (404) comprenant la fourniture de l'ensemble porte-sonde (404) avec une surface inférieure (432), un segment de surface frontal (446), et un bord frontal (452) couplant la surface inférieure (432) au segment de surface frontal (446), dans lequel le segment de surface frontal (446) est orienté selon un angle aigu par rapport à la surface inférieure (432) sur le bord frontal (452), ledit procédé comprenant en outre l'alignement de l'ensemble porte-sonde (404) avec la surface interne (214) en utilisant le bord frontal (452).
